# FASCICULE DE BREVET EUROPEEN

(11) **EP 4 248 164 B1**
(45) Date de publication et mention de la délivrance du brevet: **03.12.2025**
(21) Numéro de dépôt: 21814742.9
(22) Date de dépôt: 15.11.2021
(51) Int. Cl.: F41G 3/14, F41G 7/00, F41G 7/22, F41G 7/34, F41G 7/36, G05D 1/00, F42B 10/14, F42B 10/60, F42B 15/10, F42C 13/00

(54) **SYSTÈME DE GUIDAGE D'UNE MUNITION**
SYSTEM ZUR FÜHRUNG VON MUNITION
SYSTEM FOR GUIDING AMMUNITION

(30) Priorité: 19.11.2020 FR 2011854
(43) Date de publication de la demande: 27.09.2023
(73) Titulaire: THALES, 92190 Meudon (FR)
(72) Inventeur: MARIJON, Robin, 78995 Elancourt Cedex (FR); COGNARD, Thimothee, 78995 Elancourt Cedex (FR); MAGNAN, Eric, 78995 Elancourt Cedex (FR); CHAMOUARD, Eric, 78995 Elancourt Cedex (FR)
(74) Mandataire: Atout PI Laplace
(86) Numéro de dépôt international: PCT/EP2021/081636
(87) Numéro de publication internationale: WO 2022/106334

(56) Documents cités:
- WO-A1-2020/047364
- WO-A1-92/19928
- US-A- 5 668 346
- US-A1- 2019 323 807
- US-A1- 2019 368 846

## Description

L'invention porte sur un système de guidage d'une munition, et notamment d'une munition tirée par un canon.

Il est connu les solutions suivantes.

Pour réduire la dispersion d'impact, il est connu de mesurer la vitesse de sortie de bouche de la munition. Cette mesure de vitesse est exploitée par la munition elle-même (qui ajuste son freinage à la descente) ou exploitée pour les tirs suivants. Il s'agit d'une correction 1D (pas de correction latérale).

Il est également connu de mesurer la trajectoire de la munition: la station de tir est pourvue d'un radar permettant d'analyser la trajectoire d'un projectile et de corriger les paramètres de tir pour les munitions suivantes. Le document WO92/19928 divulgue un tel système.

Les limites sont que la correction n'est pas toujours appliquée à la munition elle-même mais bénéficie seulement aux suivantes. De plus, cette réduction de dispersion ne permet pas d'adresser des précisions métriques ou des cibles mobiles.

Il est connu le document FR28/95099 décrivant un dispositif de recalage par rapport aux propriétés terrestres (gravité, champ magnétique...), qui, s'il permet de se situer grossièrement dans l'environnement terrestre, ne permet pas d'adresser une précision métrique ni les cibles mobiles.

Une autre approche connue et déployée (comme les munitions Excalibur) consiste à utiliser un guidage par satellites pour rejoindre une cible statique dont la position a été programmée ou transmise à la munition. Naturellement, cette approche est tributaire de signaux satellite et est en échec en cas de brouillage de ceux-ci.

Dans d'autres domaines que l'artillerie, comme l'aviation civile, les télécommunications civiles, la localisation, la trajectométrie et la navigation se font grâce à des balises au sol avec pour principe la mesure du temps de vol entre chaque balise et l'objet à localiser (TDOA pour acronyme de "Time Difference of Arrival" en langue anglaise). Les différences de temps de vol associées aux positions des balises (connues à l'avance ou transmises) permettent de remonter à la position.

Le document US201970323807A1 divulgue un système de guidage d'une munition utilisant un récepteur GPS et des balises aux sol.

Il est demandé aux nouvelles munitions tirées par un canon de répondre simultanément aux exigences suivantes :
- Avoir des munitions ayant une portée accrue, notamment par rapport aux munitions actuelles. Cette exigence entraîne un fort accroissement de la dispersion du point d'impact si aucun guidage n'était fait.
- Impacter la cible dès le premie r tir (notion de "First round for effect" en langue anglaise).
- Avoir une erreur circulaire probable ou CEP pour acronyme de "Circular Error Probable" en langue anglaise inférieur à 10 m. La métrique choisie est le CEP (Circular Error Probable) qui est définie comme un cercle centré sur la moyenne des impacts et dont le rayon est la médiane de la dispersion. En pratique, sur 100 tirs, 50 tirs auront leur point d'impact à l'intérieur du cercle et le reste à l'extérieur. Le besoin actuel est d'avoir un CEP de moins de 10m.
- Adresser des cibles tant fixes que déplaçables à vitesse modérée, i.e. inférieure à 50 km/h.
- Pouvoir fonctionner sans homme dans la boucle.
- Se passer des signaux de positionnement satellite (GPS, Galileo ou autres) susceptibles d'être brouillés.

L'obtention d'une solution vérifiant l'ensemble des exigences est très difficile.

Un but de l'invention est de pallier les problèmes précédemment cités, et notamment de répondre aux exigences précédemment citées.

Il est proposé, selon un aspect de l'invention, un système de guidage d'une munition tirée par un canon vers une cible localisée, comprenant :
- des balises de guidage RF déployées au sol, chacune configurée pour émettre des signaux comprenant des données représentatives la position de la balise et des données représentatives de l'instant d'émission des signaux ; et
- un dispositif de tir de ladite munition muni de moyens de réglage de tir; dans lequel la munition comprend: "une caractéristique électromagnétique programmée de la cible (2) et/ou son environnement ;
- un dispositif d'estimation de trajectoire, muni d'un récepteur des signaux des balises et d'une centrale inertielle ou IMU pour acronyme de "Inertial Measurement Unit" en langue anglaise, délivrant une estimation de la trajectoire de la munition, et configuré pour recaler la centrale inertielle à partir des signaux des balises reçus par le récepteur, dans une première phase de vol de la munition commençant au tir de la munition et durant jusqu'à ce que les signaux des balises soient insuffisants pour recaler la centrale inertielle i.e. quand l'incertitude de mesure des signaux des balises est supérieure à l'incertitude de position calculée par la centrale inertielle ;
- un dispositif de guidage terminal, muni d'un module de reconnaissance automatique de cible, comprenant un capteur de mesure de signal électromagnétique étant un imageur dans le domaine visible et/ou Infrarouge, ou un imageur radar à ouverture synthétique, ou un radar passif ou actif, et un module de traitement des mesures du capteur configuré pour délivrer une détection de la cible; et pour estimer une reconnaissance d'une caractéristique électromagnétique de la cible (2) et/ou de son environnement ; et
- un dispositif de correction de trajectoire, muni d'une unité de commande et d'actuateurs de vol, et configuré pour recevoir une estimation de la trajectoire du dispositif d'estimation de trajectoire, dans une seconde phase de vol de la munition durant laquelle le dispositif d'estimation de trajectoire ne tient plus compte des signaux des signaux des balises, succédant à la première phase, et configuré pour recevoir la détection de la cible du dispositif de guidage terminal durant une troisième phase de vol, succédant à la deuxième phase de vol commençant à la détection de la cible par le dispositif de guidage terminal, à partir desquelles l'unité de commande gère les actuateurs de vol de manière à corriger la trajectoire, pour rejoindre la cible ou son environnement, à partir de la caractéristique électromagnétique de la cible et/ou de son environnement reconnus par le module de traitement et de la caractéristique électromagnétique de la cible et/ou de son environnement programmés dans la munition.

Un tel système permet d'avoir des munitions ayant une portée et une précision accrues, notamment par rapport aux munitions actuelles, évitant la dispersion du point d'impact. Il permet d'impacter la cible dès le premier tir (notion de "First round for effect" en langue anglaise). Il permet également d'avoir un CEP inférieur à 10m, d'adresser des cibles tant fixes que mobiles, et de ne pas mobiliser d'humain tout au long du guidage jusqu'à la cible. Le système permet également de se passer des signaux de positionnement satellite (GPS, Galileo ou autres) susceptibles d'être brouillés.

Le module de reconnaissance automatique de cible permet de ne pas mobiliser l'Humain pendant le guidage. Il ne requiert pas de moyen de communication avec l'extérieur qui pourraient être brouillés. Il s'adapte en cas de changement de position de la cible. Ce système peut être mis à jour pour reconnaitre de nouveaux types de cibles.

Ainsi, la centrale inertielle peut être recalée une fois rallumée après le choc du départ de la munition, et cela durant toute la durée de réception des signaux des balises RF, ce qui améliore précision.

Dans l'invention le capteur est un imageur dans le domaine visible et/ou Infrarouge, ou un imageur radar à ouverture synthétique, ou un radar passif ou actif.

Un système RADAR passif est un choix pertinent pour les missions de destruction d'émetteurs RADAR (brouilleurs, système RADAR ennemis). Un système RADAR actif est adapté pour imager la scène avec des technologies de type radar à ouverture synthétique ou SAR pour acronyme de "Synthetic Aperture Radar". Les systèmes RADAR passif, RADAR actif et SAR fonctionnent en conditions aérologiques dégradées (brouillard, fumigènes).

Dans l'invention le module de traitement des mesures du capteur est configuré pour estimer une reconnaissance d'une caractéristique électromagnétique de la cible.

Le module de traitement des mesures du capteur est configuré pour estimer une reconnaissance d'une caractéristique électromagnétique d'un environnement de la cible.

Dans un mode de réalisation, les actuateurs de vol comprennent des gouvernes et/ou des ailerons et/ou des empennages et/ou des dispositifs pyrotechniques.

Selon un mode de réalisation, les données échangées entre le récepteur de données de localisation et les balises sont de type TDOA.

Dans un mode de réalisation, le récepteur de données de localisation est également un émetteur, et les données échangées entre l'émetteur/récepteur de données de localisation et les balises sont de type RTOF.

Ainsi, on évite le besoin de synchronisation des balises RF.

Selon un mode de réalisation, la munition d'artillerie est un obus d'artillerie, une roquette de longue portée, une roquette motorisée, ou un missile sol-sol.

Dans un mode de réalisation, les données représentatives la position de la balise comprennent des coordonnées GPS de la balise.

En variante, les données représentatives la position de la balise comprennent un numéro d'identifiant de la balise associé à une position de la balise dans une table de correspondance.

L'invention sera mieux comprise à l'étude de quelques modes de réalisation décrits à titre d'exemples nullement limitatifs et illustrés par le dessin annexé sur lequel:
[Fig.1] illustre schématiquement un mode de réalisation d'un système de guidage d'une munition tirée par un canon, selon un aspect de l'invention;
[Fig.2] illustre schématiquement le fonctionnement du système de la figure 1, selon un aspect de l'invention; et
[Fig.3] illustre schématiquement une munition du système de la figure 1.

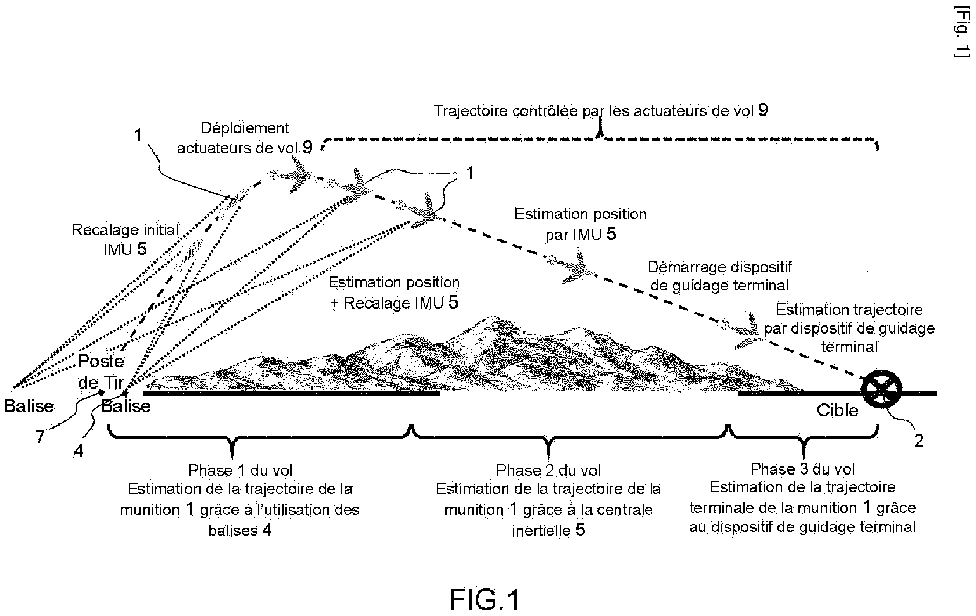

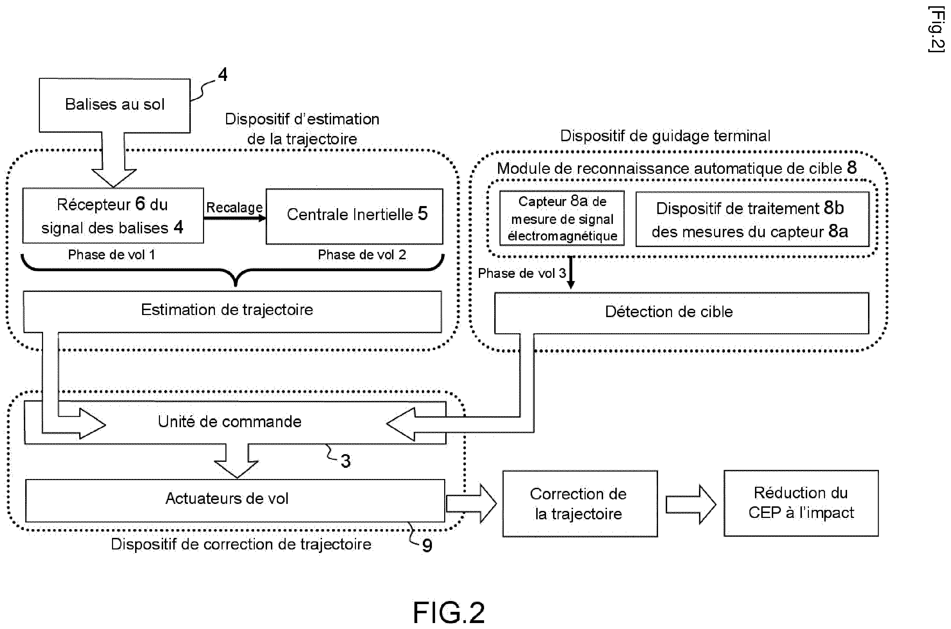

Les figures 1 et 2 représentent schématiquement un système de guidage, et son fonctionnement, d'une munition 1 tirée par un canon vers une cible 2 localisée, comprenant des balises 4 de guidage RF déployées au sol, chacune configurée pour émettre des signaux comprenant des données représentatives la position de la balise et des données représentatives de l'instant d'émission des signaux, et un dispositif ou poste de tir 7 de ladite munition 1 muni de moyens de réglage de tir.

La munition 1 comprend un dispositif d'estimation de trajectoire, muni d'un récepteur 6 des signaux des balises 4 et d'une centrale inertielle 5, délivrant une estimation de la trajectoire de la munition 1, et configuré pour recaler la centrale inertielle 5 à partir des signaux des balises 4 reçus par le récepteur 6, dans une première phase de vol de la munition 1 commençant au tir de la munition 1 et durant jusqu'à ce que les signaux des balises 4 soient insuffisants pour recaler la centrale inertielle i.e. quand l'incertitude de mesure des signaux des balises 4 est supérieure à l'incertitude de la position calculée par la centrale inertielle 5.

La munition 1 comprend également un dispositif de guidage terminal, muni d'un module 8 de reconnaissance automatique de cible, comprenant un capteur 8a de mesure de signal électromagnétique et un module de traitement 8b des mesures du capteur 8a configuré pour délivrer une détection de la cible 2.

La munition comprend également un dispositif de correction de trajectoire, muni d'une unité de commande 3 et d'actuateurs de vol 9, et configuré pour recevoir une estimation de la trajectoire du dispositif d'estimation de trajectoire, dans une seconde phase de vol de la munition 1 durant laquelle le dispositif d'estimation de trajectoire ne tient plus compte des signaux des signaux des balises 4, succédant à la première phase, et configuré pour recevoir la détection de la cible 2 du dispositif de guidage terminal durant une troisième phase de vol, succédant à la deuxième phase de vol commençant à la détection de la cible 2 par le dispositif de guidage terminal, à partir desquelles l'unité de commande 3 gère les actuateurs de vol 9 de manière à corriger la trajectoire.

Les balises RF 4 ont été déployées au sol en accompagnement des pièces d'artillerie 7 permettant les tirs de munitions 1. La chaîne de renseignement a reconnu et localisé une cible 2 d'intérêt avec une incertitude quant à la position estimée. Le commandement juge la position de celle-ci accessible à un tir d'une pièce d'artillerie 7 et lui envoie l'ordre de traiter la cible 2.

Au niveau de la pièce d'artillerie 7, des informations relatives à la cible 2 ou d'un environnement de la cible 2 (caractéristique électromagnétique, comme des données d'imagerie ou une signature radar), et/ou à la position estimée de la cible 2 et/ou de l'environnement de la cible 2 sont programmées dans la munition 1.

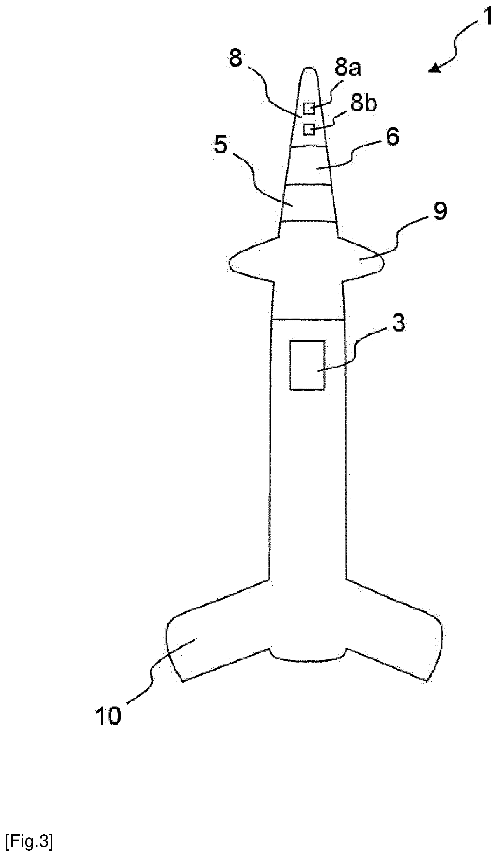

La munition 1 est munie d'actuateurs de vol 9, comme représenté sur les figures 1 et 3, et d'ailes ou empennage stabilisateur 10 sur l'arrière de la munition 1.

Les actuateurs de vol 9 servent à gouverner la munition 1 (i.e. à décider de la trajectoire), et les ailes ou empennage stabilisateur 10 servent à améliorer la portance de la munition et donc sa portée.

Les actuateurs de vol 9 peuvent comprendre des gouvernes et/ou des ailerons et/ou des empennages et/ou des dispositifs pyrotechniques.

Comme illustré sur la figure 1, juste après le tir d'une munition 1 par une pièce d'artillerie 7, le récepteur 6 des signaux des balises RF 4 transmet ces données au récepteur 6 du dispositif d'estimation de trajectoire, qui les utilise pour recaler la centrale inertielle 5.

Tout au long d'une première phase de vol, la munition 1 calcule sa position en exploitant au mieux sa centrale inertielle 5 et son récepteur 6 des signaux des balises RF 4.

Au cours du vol, la munition 1 peut mettre en œuvre au moins un dispositif 10 visant à accroitre sa portée tel qu'un dispositif pyrotechnique de réduction de traînée ou "base bleed" en langue anglaise, un empennage, un système d'ailettes, ou un moteur-fusée ou "rocket motor" en langue anglaise.

En outre, des actuateurs de vol 9 tel des gouvernes et/ou des ailerons et/ou des empennages et/ou des dispositifs pyrotechniques peuvent lui donner une capacité de manœuvre.

Les informations conjointes du dispositif d'estimation de trajectoire et du dispositif de guidage terminal sont utilisées par le dispositif de correction de trajectoire pour commander les actuateurs de vol 9 permettant de corriger la trajectoire et améliorer ainsi la précision de la munition 1.

La munition 1 exploite la centrale inertielle 5 et le récepteur 6 des signaux des balises RF 4 pour se situer dans l'espace. Elle utilise la capacité de manœuvre des actuateurs de vol 9 afin de corriger sa trajectoire.

La correction de la trajectoire permet de compenser la dispersion de tir. Au cours du vol, la munition 1 s'éloignant de plus en plus des balises RF 4, l'estimation de position à partir des données du récepteur 6 tend à se dégrader, et la munition 1 exploite davantage sa centrale inertielle 5.

A quelques kilomètres au-dessus du sol, typiquement entre 1 et 5 kilomètres au-dessus du sol, le module de reconnaissance automatique de cible 8 est activé et fournit un signal électromagnétique. Le module de traitement 8b reconnaît la cible 2 et sa position à partir des données fournies par le capteur 8a en et en s'appuyant sur les informations sur la cible 2 et/ou son environnement programmés dans la munition 1. Une fois la cible 2 reconnue, la munition 1 asservit son vol pour la rejoindre.

Le nombre de balises RF 4 est au minimum de 4, afin de pouvoir définir une position de manière non ambiguë. Les balises RF 4 sont déployées sur une zone autour des pièces d'artillerie, typiquement dans un disque de rayon compris entre 5 et 30 kilomètres, par exemple de rayon de 10 km). Chacune est renseignée sur sa position (relevé terrain ou signaux satellite d'opportunité) et mise à l'état muet (pas d'émission radio).

Juste avant le tir d'une munition 1 d'artillerie par une pièce d'artillerie 7, un signal d'activation des balises RF 4 est émis, qui répondent en indiquant leur position. Un bref dialogue permet la synchronisation entre balises RF 4 puis elles émettent pendant le temps de vol de la munition 1, leur message de navigation (incluant des données représentatives la position de la balise 4 et des données représentatives de l'instant d'émission des signaux) à une cadence de l'ordre de quelques Hz.

En variante, le récepteur 6 de données de localisation est également un émetteur, et les données échangées entre l'émetteur/récepteur de données de localisation et les balises sont de type RTOF (Round-trip Time Of Flight) : dans ce cas, la munition 1 interroge les balises RF 4 et exploite leur réponse pour mesurer le temps aller-retour entre la munition 1 et chaque balise RF 4 et en déduire sa position.

Dans ce cas, on peut imaginer que les positions des balises RF 4 aient été données à la munition 1 avant tir. Cette variante a pour intérêt l'absence de besoin de synchronisation entre les balises RF. Elle a pour inconvénient la nécessité d'avoir également à bord de la munition 1 une voie d'émission RF.

## Revendications

1. Système de guidage d'une munition (1) tirée par un canon vers une cible (2) localisée, comprenant :
- des balises (4) de guidage RF déployées au sol, chacune configurée pour émettre des signaux comprenant des données représentatives la position de la balise (4) et des données représentatives de l'instant d'émission des signaux ; et
- un dispositif de tir (7) de ladite munition (1) muni de moyens de réglage de tir ;
dans lequel la munition (1) comprend :
- une caractéristique électromagnétique programmée de la cible (2) et/ou de son environnement ;
- un dispositif d'estimation de trajectoire, muni d'un récepteur (6) des signaux des balises (4) et d'une centrale inertielle (5), délivrant une estimation de la trajectoire de la munition (1), et configuré pour recaler la centrale inertielle (5) à partir des signaux des balises (4) reçus par le récepteur (6), dans une première phase de vol de la munition (1) commençant au tir de la munition (1) et durant jusqu'à ce que les signaux des balises (4) soient insuffisants pour recaler la centrale inertielle i.e. quand l'incertitude de mesure des signaux des balises (4) est supérieure à l'incertitude de la position calculée par la centrale inertielle (5) ;
- un dispositif de guidage terminal, muni d'un module (8) de reconnaissance automatique de cible, comprenant un capteur (8a) de mesure de signal électromagnétique étant un imageur dans le domaine visible et/ou Infrarouge, ou un imageur radar à ouverture synthétique, ou un radar passif ou actif, et un module de traitement (8b) des mesures du capteur (8a) configuré pour délivrer une détection de la cible (2) et pour estimer une reconnaissance d'une caractéristique électromagnétique de la cible (2) et/ou de son environnement ; et
- un dispositif de correction de trajectoire, muni d'une unité de commande (3) et d'actuateurs de vol (9), et configuré pour recevoir une estimation de la trajectoire du dispositif d'estimation de trajectoire, dans une seconde phase de vol de la munition (1) durant laquelle le dispositif d'estimation de trajectoire ne tient plus compte des signaux des signaux des balises (4), succédant à la première phase, et configuré pour recevoir la détection de la cible (2) du dispositif de guidage terminal durant une troisième phase de vol, succédant à la deuxième phase de vol commençant à la détection de la cible (2) par le dispositif de guidage terminal, à partir desquelles l'unité de commande (3) gère les actuateurs de vol (9) de manière à corriger la trajectoire, pour rejoindre la cible (2) ou son environnement, à partir de la caractéristique électromagnétique de la cible (2) et/ou de son environnement reconnus par le module de traitement (8b) et de la caractéristique électromagnétique programmée dans la munition (1) de la cible (2) et/ou de son environnement.

2. Système selon l'une des revendications précédentes, dans lequel les actuateurs de vol (9) comprennent des gouvernes et/ou des ailerons et/ou des empennages et/ou des dispositifs pyrotechniques.

3. Système selon l'une des revendications 1 à 5, dans lequel les données échangées entre le récepteur (6) de données de localisation et les balises (4) sont de type TDOA.

4. Système selon l'une des revendications 1 à 5, dans lequel le récepteur (6) de données de localisation est également un émetteur, et les données échangées entre l'émetteur/récepteur (6) de données de localisation et les balises (4) sont de type RTOF.

5. Système selon l'une des revendications précédentes, dans lequel la munition (1) d'artillerie est un obus d'artillerie, une roquette de longue portée, une roquette motorisée, ou un missile sol-sol.

6. Système selon l'une des revendications précédentes, dans lequel les données représentatives la position de la balise (4) comprennent des coordonnées GPS de la balise (4).

7. Système selon l'une des revendications 1 à 8, dans lequel les données représentatives la position de la balise (4) comprennent un numéro d'identifiant de la balise (4) associé à une position de la balise (4) dans une table de correspondance.

## Patentansprüche

1. System zum Leiten einer Munition (1), die aus einem Geschütz abgefeuert wird, zu einem georteten Ziel (2), umfassend:
- am Boden stationierte HF-Leitbaken (4), die jeweils dafür konfiguriert sind, Signale auszusenden, die Daten umfassen, die für die Position der Bake (4) repräsentativ sind, und Daten, die für den Zeitpunkt der Aussendung der Signale repräsentativ sind; und
- eine Abschussvorrichtung (7) für die Munition (1), die mit Schusseinstellmitteln ausgestattet ist;
wobei die Munition (1) umfasst:
- eine programmierte elektromagnetische Charakteristik des Ziels (2) und/oder seiner Umgebung;
- eine Flugbahnschätzvorrichtung, die mit einem Empfänger (6) für die Signale der Baken (4) und einem Trägheitsnavigationssystem (5) ausgestattet ist, eine Schätzung der Flugbahn der Munition (1) liefert und dafür konfiguriert ist, das Trägheitsnavigationssystem (5) auf Grundlage der vom Empfänger (6) empfangenen Signale der Baken (4) in einer ersten Flugphase der Munition (1) neu einzustellen, die mit dem Abschuss der Munition (1) beginnt und andauert, bis die Signale der Baken (4) unzureichend sind, um das Trägheitsnavigationssystem neu einzustellen, d. h. wenn die Messunsicherheit der Signale der Baken (4) größer ist als die Unsicherheit der vom Trägheitsnavigationssystem (5) berechneten Position;
- eine Endleitvorrichtung, die mit einem Modul (8) zur automatischen Zielerkennung ausgestattet ist, das einen Messsensor (8a) für elektromagnetische Signale, der ein Bildgeber im sichtbaren und/oder Infrarotbereich oder ein Radarbildgeber mit synthetischer Apertur oder ein passives oder aktives Radar ist, und ein Modul (8b) zur Verarbeitung der Messungen des Sensors (8a) umfasst, das dafür konfiguriert ist, eine Erfassung des Ziels (2) zu liefern und eine Erkennung einer elektromagnetischen Charakteristik des Ziels (2) und/oder seiner Umgebung zu schätzen; und
- eine Flugbahnkorrekturvorrichtung, die mit einer Steuereinheit (3) und Flugaktuatoren (9) ausgestattet und dafür konfiguriert ist, in einer auf die erste Phase folgenden zweiten Flugphase der Munition (1), während der die Flugbahnschätzvorrichtung Signale der Baken (4) nicht mehr berücksichtigt, eine Schätzung der Flugbahn von der Flugbahnschätzvorrichtung zu empfangen, und dafür konfiguriert ist, während einer auf die zweite Flugphase folgenden dritten Flugphase, die mit der Erfassung des Ziels (2) durch die Endleitvorrichtung beginnt, die Erfassung des Ziels (2) von der Endleitvorrichtung zu empfangen, auf deren Grundlage die Steuereinheit (3) die Flugaktuatoren (9) verwaltet, um auf Grundlage der elektromagnetischen Charakteristik des Ziels (2) und/oder seiner Umgebung, die vom Verarbeitungsmodul (8b) erkannt wurde, und der programmierten elektromagnetischen Charakteristik in der Munition (1) des Ziels (2) und/oder seiner Umgebung die Flugbahn zu korrigieren, um das Ziel (2) oder seine Umgebung zu erreichen.

2. System nach einem der vorstehenden Ansprüche, wobei die Flugaktuatoren (9) Höhenruder und/oder Querruder und/oder Leitwerke und/oder pyrotechnische Vorrichtungen umfassen.

3. System nach einem der Ansprüche 1 bis 5, wobei die zwischen dem Empfänger (6) für Ortungsdaten und den Baken (4) ausgetauschten Daten vom Typ TDOA sind.

4. System nach einem der Ansprüche 1 bis 5, wobei der Empfänger (6) für Ortungsdaten ebenfalls ein Sender ist, und die zwischen dem Sender/Empfänger (6) für Ortungsdaten und den Baken (4) ausgetauschten Daten vom Typ RTOF sind.

5. System nach einem der vorstehenden Ansprüche, wobei die Artilleriemunition (1) ein Artilleriegeschoss, eine Langstreckenrakete, eine motorisierte Rakete oder eine Boden-Boden-Rakete ist.

6. System nach einem der vorstehenden Ansprüche, wobei die Daten, die für die Position der Bake (4) repräsentativ sind, GPS-Koordinaten der Bake (4) umfassen.

7. System nach einem der Ansprüche 1 bis 8, wobei die Daten, die für die Position der Bake (4) repräsentativ sind, eine Identifikationsnummer der Bake (4) umfassen, die in einer Entsprechungstabelle einer Position der Bake (4) zugeordnet ist.

## Claims

1. System for guiding an item of ammunition (1) fired by a cannon towards a localized target (2), comprising:
- RF guidance beacons (4) deployed on the ground, each configured to emit signals comprising data representative of the position of the beacon (4) and data representative of the time of emission of the signals; and
- a firing device (7) for firing said item of ammunition (1), equipped with firing adjustment means;
wherein the item of ammunition (1) comprises:
- a programmed electromagnetic characteristic of the target (2) and/or of the environment thereof;
- a trajectory estimation device, equipped with a receiver (6) for receiving the signals from the beacons (4) and with an inertial measurement unit (5), yielding an estimate of the trajectory of the item of ammunition (1), and configured to recalibrate the inertial measurement unit (5) on the basis of the signals from the beacons (4) that are received by the receiver (6), in a first phase of flight of the item of ammunition (1) starting when the item of ammunition (1) is fired and lasting until the signals from the beacons (4) are insufficient to recalibrate the inertial measurement unit, i.e. when the measurement uncertainty of the signals from the beacons (4) is greater than the uncertainty of the position calculated by the inertial measurement unit (5);
- a terminal guidance device, equipped with an automatic target recognition module (8), comprising a sensor (8a) for measuring an electromagnetic signal, said sensor being an imager in the visible and/or infrared range, or a synthetic aperture radar imager, or a passive or active radar system, and a processing module (8b) for processing the measurements from the sensor (8a) configured to yield a detection of the target (2) and to estimate a recognition of an electromagnetic characteristic of the target (2) and/or of the environment thereof; and
- a trajectory correction device, equipped with a control unit (3) and with flight actuators (9), and configured to receive an estimate of the trajectory from the trajectory estimation device, in a second phase of flight of the item of ammunition (1) during which the trajectory estimation device no longer takes into account the signals from the beacons (4), following the first phase, and configured to receive the detection of the target (2) from the terminal guidance device during a third phase of flight, following the second phase of flight starting with the detection of the target (2) by the terminal guidance device, on the basis of which the control unit (3) manages the flight actuators (9) so as to correct the trajectory, in order to reach the target (2) or the environment thereof, on the basis of the electromagnetic characteristic of the target (2) and/or of the environment thereof that are recognized by the processing module (8b) and on the basis of the electromagnetic characteristic of the target (2) and/or of the environment thereof that is programmed into the item of ammunition (1).

2. System according to any one of the preceding claims, wherein the flight actuators (9) comprise rudders and/or ailerons and/or tail assemblies and/or pyrotechnic devices.

3. System according to any one of claims 1 to 5, wherein the data exchanged between the location data receiver (6) and the beacons (4) is of the TDOA type.

4. System according to any one of claims 1 to 5, wherein the location data receiver (6) is also an emitter, and the data exchanged between the location data emitter/receiver (6) and the beacons (4) is of the RTOF type.

5. System according to any one of the preceding claims, wherein the item of artillery ammunition (1) is an artillery shell, a long-range rocket, a motor-powered rocket, or a surface-to-surface missile.

6. System according to any one of the preceding claims, wherein the data representative of the position of the beacon (4) comprises GPS coordinates of the beacon (4).

7. System according to any one of claims 1 to 8, wherein the data representative of the position of the beacon (4) comprises an identifier number of the beacon (4) associated with a position of the beacon (4) in a look-up table.
